# EUROPÄISCHE PATENTSCHRIFT

(11) **EP 1 985 594 B1**
(45) Veröffentlichungstag und Bekanntmachung des Hinweises auf die Patenterteilung: **12.10.2011**
(21) Anmeldenummer: 07008422.3
(22) Anmeldetag: 25.04.2007
(51) Int. Cl.: C03C 17/22, C23C 20/06, C23C 26/00

(54) **Formkörper mit einer dauerhaften siliciumnitridhaltigen Hartbeschichtung, Verfahren zu dessen Herstellung und dessen Verwendung**
Moulded body with a long life hard coating made of silicium nitride, method for its manufacture and its application
Corps de formage doté d'un revêtement dur durable contenant du nitrure de silicium, son procédé de fabrication et son utilisation

(43) Veröffentlichungstag der Anmeldung: 29.10.2008
(73) Patentinhaber: ESK Ceramics GmbH & Co.KG, 87437 Kempten (DE)
(72) Erfinder: Engler, Martin, Dr., 87439 Kempten (DE); Lesniak, Christoph, Dr., 87474 Buchenberg (DE); Uibel, Krishna, 87435 Kempten (DE)
(74) Vertreter: TER MEER - STEINMEISTER & PARTNER GbR

(56) Entgegenhaltungen:
- EP-A- 1 780 307
- WO-A1-2007/039310
- DE-A1- 10 326 815
- PRAKASH P ET AL: "USE OF SILICON OXYNITRIDE AS A GRAPHITE MOLD RELEASING COATING FOR THE GROWTH OF SHAPED MULTICRYSTALLINE SILICON CRYSTALS", JOURNAL OF CRYSTAL GROWTH, ELSEVIER, AMSTERDAM, NL LNKD- DOI:10.1016/0022-0248(94)90007-8, vol. 144, no. 1/02, 1 November 1994 (1994-11-01), pages 41-47, XP000484426, ISSN: 0022-0248

## Beschreibung

### Gebiet der Erfindung

Die vorliegende Erfindung betrifft einen Formkörper aus einem Substrat und einer darauf aufgebrachten dauerhaften Hartbeschichtung, welche abriebund kratzfest ist, sodass der Formkörper transportabel ist, ein Verfahren zur Herstellung eines solchen Formkörpers sowie die Verwendung solcher Formkörper, insbesondere als Schmelztiegel zur Anwendung im Bereich korrosiver Nichteisenmetallschmelzen, insbesondere im Bereich der Solar-Silicium-Verarbeitung und andererseits die Verwendung eines solchen Formkörpers als Steigrohr in der Aluminium-Metallurgie, insbesondere dem Aluminium-Niederdruckguss.

### Hintergrund der Erfindung

Zum Erschmelzen und zur Rekristillation von Siliciumbarren aus Siliciumkörnungen, Siliciumgranulaten oder Siliciumstückgut werden Tiegel aus Graphit oder aus Siliciumnitrid, jedoch hauptsächlich aus SiO₂ (fused silica) verwendet. Über exakt definierte Abkühlvorgänge kristallisieren aus der Schmelze Siliciumbarren mit den gewünschten Gefügen und Reinheiten aus, die anschließend zu dünnen Scheiben geschnitten werden und den aktiven Bestandteil von Photovoltaikanlagen bilden.

Wesentlich ist hierbei, dass durch die bei der Verarbeitung verwendeten Materialien, wie Schmelztiegel, die Solar-Silicium-Qualität nicht negativ beeinträchtigt wird und die Siliciumschmelze defektfrei erstarren und unzerstört aus dem Tiegel entformt werden kann. In diesem Zusammenhang ist es wichtig, den korrosiven Angriff von flüssigem Siliciummetall auf das Tiegelmaterial zu verhindern, da die Schmelze sonst verunreinigt würde. Ferner führen Anhaftungen, Infiltration und Diffusion zu Problemen beim Entformen der Siliciumbarren, sodass die Gefahr eines Reißens oder Zerspringens des polykristallinen Siliciumblocks besteht.

Durch die korrosive Siliciumschmelze kommt es zu einem Angriff auf den SiO₂ -Tiegel, da zwischen Si und SiO₂ eine chemische Reaktion unter Bildung von flüchtigem SiO stattfindet. Zudem gelangen auf diese Weise unerwünschte Verunreinigungen aus dem Tiegelmaterial in die Siliciumschmelze.

Insbesondere sind Anhaftungen des erstarrenden oder erstarrten Siliciumblocks unter allen Umständen zu vermeiden, da das Silicium sehr große thermische Ausdehnungen durchläuft, wobei kleinste Anhaftungen zu mechanischem Stress und damit zum Bruch der kristallinen Struktur führen, was einen Ausschuss an Siliciummaterial bedeutet.

In der Aluminium-Metallurgie, insbesondere beim Aluminium-Niederdruckguss werden Steigrohre aus Eisenlegierungen oder aus Quarzglas (fused silica) verwendet. Aufgrund der stark korrosiv wirkenden Aluminiumschmelze bei Temperaturen im Bereich von 650 bis 800°C müssen diese Steigrohre in regelmäßigen Abständen mit feuerfesten Oxiden bzw. Nitriden beschichtet werden, um ein zu schnelles Auflösen dieser Werkstoffe im flüssigen Aluminium zu vermeiden. Üblicherweise kommen hierbei Beschichtungen aus Aluminiumoxid oder Bornitrid zum Einsatz, welche aus Schlichten, die organische Bindemittel enthalten, durch Tauchen, Pinseln oder Sprühen aufgebracht werden. Durch den kombinierten korrosiven und mechanischen Angriff durch die heiße Schmelze und die aufschwimmende Schlacke ist die Lebensdauer solcher Beschichtungen jedoch auf Stunden bzw. wenige Tage begrenzt. Alternativ zu den beschichteten Steigrohren aus Eisenlegierung oder Quarz kommen auch Steigrohre aus Siliciumnitrid-Keramik zum Einsatz, welche vollkommen inert gegenüber korrosiven Angriffen durch Aluminiumschmelzen sind. Die Kosten dieser Siliciumnitrid-Rohre sind allerdings um ein vielfaches höher als bei den Standard-Steigrohren mit Beschichtung.

### Stand der Technik

Aus EP 963 464 B1 sind mit Siliciumnitrid-Schichten versehene Schmelztiegel aus Quarz, Graphit oder Keramik zur Vermeidung von Verklebungen zwischen Schmelztiegel und Nichteisenmetallen nach Kontakt des Schmelztiegels mit erstarrenden Nichteisenmetallschmelzen, wie Siliciumschmelzen, bekannt, wobei die Schichten aus einem Siliciumnitrid-Pulver hoher Reinheit bestehen. Die Siliciumnitrid-Pulver weisen einen niedrigen Sauerstoffgehalt sowie ein bestimmtes Aspektverhältnis auf. Diese Pulverbeschichtungen werden direkt vom Anwender vor dem Einsatz der Schmelztiegel aufgebracht und dadurch hergestellt, dass man hochreines Siliciumnitrid-Pulver in einem Lösungsmittel dispergiert und dann beispielsweise durch Sprühen der Suspension auf die Tiegel aufbringt. Durch thermische Nachbehandlung müssen das Lösungsmittel und gegebenenfalls eingesetzte organische Binderbestandteile entfernt werden.

Das hochreine Siliciumnitrid selbst erwies sich als chemisch sehr beständig gegenüber Siliciumschmelzen. Allein durch das Gewicht der Schmelze kommt es jedoch zur Zwangsbenetzung bzw. Infiltration der porösen Siliciumnitrid-Pulverschicht. Diese muss daher in einer solchen Dicke ausgebildet werden, dass sie nicht vollständig infiltriert wird und damit immer noch als Trenn- bzw. Entformungsschicht dienen kann. Entsprechend dicke Schichten sind jedoch wiederum entsprechend weich bzw. nicht besonders abriebfest, sodass beim Beladen der Tiegel besondere Sorgfalt angewendet werden muss, ganz zu Schweigen von langen Transportwegen oder dem Versand gebrauchsfertiger beschichteter Tiegel.

Die herkömmlichen Tiegelbeschichtungen zur Anwendung auf dem Gebiet von Solarsilicium sind somit darin nachteilig, dass die Beschichtungen eine geringe mechanische Stabilität aufweisen, da diese nur aus Siliciumnitrid-Pulver bestehen, sodass die Beschichtungen immer unmittelbar vor der Beladung der Tiegel mit dem Siliciumpulver, -grus oder -stückgut erfolgen müssen. Eine vorausgehende Beschichtung der Tiegel nicht unmittelbar an der Stelle der Verwendung ist somit nicht möglich. Aufgrund der weichen Pulverbeschichtungen muss weiterhin extreme Sorgfalt beim Beladen der Tiegel mit grobem Stückgut angewandt werden, um eine Beschädigung der Schicht zu vermeiden. Weiterhin kommt es aufgrund der Infiltration der porösen Siliciumnitrid-Pulverschicht mit dem schmelzflüssigen Silicium beim Entformen zu unerwünschten Anbackungen.

Die DE 103 26 769 B3 beschreibt dauerhafte Bornitrid-Formtrennschichten für das Druckgießen von Nichteisenmetallen sowie Schlichten zu deren Herstellung, wobei refraktäre nanoskalige Bindemittel als Bindephase für Bornitrid eingesetzt werden. Insbesondere werden Suspensionen aus SiO₂-basiertem Sol-Gel-Binder und Bornitridpulver auf Metall- oder anorganische Nicht-Metalloberflächen aufgebracht und die so erhaltenen Beschichtungen getrocknet und thermisch verdichtet. Bei Temperaturen über 500°C wandelt sich das Bindersystem in eine glasartige Matrix um, die der dabei entstehenden keramischen dichten Schicht mechanische Stabilität verleiht. Auf dem Gebiet der Solar-Silicium-Anwendung können diese bornitridhaltigen Schichten jedoch nicht eingesetzt werden, da Bornitrid als Verunreinigung im Solarsilicium nicht erwünscht ist.

Die DE 103 26 815 A1 beschreibt ein Substrat mit einer antiadhäsiven Beschichtung, erhältlich durch Auftragen einer Beschichtungszusammensetzung auf ein Substrat und Härten, wobei die Beschichtungszusammensetzung a) Festoffteilchen von einem Trennmittel, ausgenommen Bornitrid, und b) ein Bindemittel, umfassend oberflächenmodifizierte nanoskalige Feststoffteilchen, umfasst. Die Trennmittelteilchen werden hierbei ausgewählt aus Graphit, Graphitverbindungen, Metallsulfiden, Metallseleniden und/oder Metalltelluriden. Auch diese Beschichtungen sind für die Solar-Silicium-Anwendung nicht geeignet, da auch die dort genannten Trennmittel, wie Graphit oder Metallsulfide, -selenide und -telluride als Verunreinigungen im Solarsilicium unerwünscht sind.

### Aufgabe der Erfindung

Der Erfindung liegt daher die Aufgabe zugrunde, einen Formkörper mit einer dauerhaften Beschichtung auf einem Substrat vorzusehen, welche Beschichtung insbesondere geeignet ist für Anwendungen im Bereich der Solar-Silicium-Verarbeitung, ohne die im Stand der Technik bekannten Nachteile aufzuweisen. Andererseits soll eine dauerhafte und kostengünstige Beschichtung für Anwendungen in der Aluminium-Metallurgie vorgesehen werden, wobei insbesondere die Standzeit von Steigrohren verlängert werden soll.

### Zusammenfassung der Erfindung

Die obengenannte Aufgabe wird gelöst durch einen Formkörper gemäß Anspruch 1, umfassend ein Substrat mit einer dauerhaften Hartbeschichtung, ein Verfahren zur Herstellung eines solchen Formkörpers gemäß Anspruch 19 sowie die Verwendung eines solchen Formkörpers gemäß den Ansprüchen 21-23. Vorteilhafte bzw. besonders zweckmäßige Ausgestaltungen des Anmeldungsgegenstandes sind in den Unteransprüchen angegeben.

Gegenstand der Erfindung ist somit ein Formkörper, umfassend ein Substrat mit einer dauerhaften Hartbeschichtung, wobei die Hartbeschichtung bis zu 75 Gew.-% Siliciumnitrid und mindestens 25 Gew.-% eines anorganischen Bindemittels umfasst, und wobei der Gesamtsauerstoffgehalt der Hartbeschichtung > 15 Gew.-% beträgt.

Gegenstand der Erfindung ist weiterhin ein Verfahren zur Herstellung eines Formkörpers aus einem Substrat mit einer dauerhaften Hartbeschichtung, umfassend die Schritte a) Vorsehen eines Substrats, und b) Aufbringen einer dauerhaften Hartbeschichtung, welche bis zu 75 Gew.-% Siliciumnitrid und mindestens 25 Gew.-% eines anorganischen Bindemittels umfasst, und wobei der Gesamtsauerstoffgehalt der Hartbeschichtung > 15 Gew.-% beträgt.

Gegenstand der Erfindung ist ebenfalls die Verwendung eines erfindungsgemäßen Formkörpers auf dem Gebiet der korrosiven Nichteisenmetallschmelzen, insbesondere die Verwendung eines Formkörpers in Form eines Schmelztiegels zur Herstellung von Siliciumschmelzen sowie die Verwendung eines Formkörpers in Form eines Steigrohres in der Aluminium-Metallurgie, insbesondere dem Aluminium-Niederdruckguss.

Der überraschende Effekt bei den erfindungsgemäßen Siliciumnitrid-Hartbeschichtungen besteht darin, dass hier hart gebundene Siliciumnitrid-Partikel vorliegen, welche die Entformung von erstarrten Nichteisenmetallschmelzen nicht behindern, ohne die Nachteile des porösen und losen Siliciumnitrid-Pulverschichtaufbaus beim Transport und Beladen der mit solchen Hartbeschichtungen versehenen Formkörper aufzuweisen.

Für den Fachmann war es überraschend, dass die aus DE 103 26 769 B3 und DE 103 26 815 A1 bekannten SiO₂-basierten Bindersysteme sich zur Herstellung von dauerhaften Siliciumnitrid-Hartbeschichtungen für die erfindungsgemäß vorgesehenen Anwendungen eignen, da er erwartet hätte, dass die zusätzlichen anorganischen Bindemittel bzw. nanoskaligen Feststoffteilchen die Entformung der erstarrten Nichteisenmetallschmelzen erschweren würden und dass Verunreinigungen in die erstarrten Nichteisenmetallschmelzen, insbesondere Solar-Silicium-Blöcke eingeschleppt werden, was es unter allen Umständen zu vermeiden gilt. Der Fachmann hätte zudem erwartet, dass es bei Verwendung eines SiO₂-basierten Bindersystems ebenfalls zu Reaktionen zwischen dem schmelzflüssigem Silicium und dem SiO₂ des Bindersystems kommt, wie es im System Si-Schmelze und SiO₂-Tiegel der Fall ist. Die Si-Schmelze greift korrosiv das SiO₂-Material an, wobei gasförmiges SiO entsteht, das entweicht und somit weiteres SiO₂ der Si-Schmelze ausgesetzt ist.

Die Beschichtung müsste somit kontinuierlich durch diese Reaktion aufgelöst werden. Diese Reaktion ist beispielsweise aus Cryst. Res. Technol. 38, No. 7-8, 669-675 (2003) bekannt.

Die erfindungsgemäßen Siliciumnitrid-Hartschichten weisen insbesondere folgende Vorteile auf:
- Die Hartschichten sind absolut transportstabil, sodass gebrauchsfertig beschichtete Formkörper, wie Schmelztiegel, an den Endanwender geliefert werden können.
- Die Beschichtungen sind abriebfest und bieten daher Schutz vor Beschädigung beim Beladen der Formkörper, insbesondere beim Beladen von beschichteten Schmelztiegeln mit Roh-Silicium oder auch beim Handtieren mit solchen Formkörpern. Andererseits kommt es bei den herkömmlichen Siliciumnitrid-Pulverbeschichtungen durch Beschädigung der Schutzschicht zu unerwünschten Korrosionserscheinungen und Anhaftungen, was bei den erfindungsgemäßen Hartschichten nicht der Fall ist.
- Die erfindungsgemäßen Hartschichten sind dicht und hochtemperaturstabil, es kommt nicht zur Infiltration durch das schmelzflüssige Nichteisenmetall, wie Silicium, sodass die erstarrten Schmelzen ohne Anhaftungen entformt werden können. Damit entfällt der zusätzliche Schritt der mechanischen Entfernung der Anhaftungen und es entsteht kein oder weniger Ausschuss. Andererseits kommt es bei den herkömmlichen Siliciumnitrid-Pulverschichten nach dem Entformen zu Anhaftungen, da die poröse Siliciumnitrid-Schicht durch das schmelzflüssige Nichteisenmetall, wie Silicium, infiltriert wird. Diese Anhaftungen müssen mechanisch entfernt werden, was einerseits einen zusätzlichen Arbeitsschritt darstellt und andererseits Materialausschuss bedeutet.
- Bei den Schichten gemäß dem Stand der Technik (EP 963 464) besteht das Problem, daß durch die diffusionsoffene Siliciumnitrid-Pulverschicht Verunreinigungen aus dem SiO₂-Tiegel in das Solar-Silicium hineindiffundieren können, weil die Möglichkeit eines Schmelze-Substrat-Kontaktes gegeben ist. Dadurch werden Verunreinigungen in das Solar-Silicium eingeschleppt, was zu erheblichen Qulitätseinbußen und damit zu Ausschuß führt.

Bei den erfindungsgemäßen Schichten besteht ein weiterer Vorteil darin, daß die Schichten aufgrund ihrer dichten Struktur als Diffusionsbarriere für Verunreinigungen wirken, weil sie den direkten Schmelze-Substrat-Kontakt verhindern.

Im Falle der Anwendung der Siliciumnitrid-Hartbeschichtung für Steigrohre in der Aluminium-Metallurgie werden erhebliche Kostenvorteile erzielt, da das preisgünstige Grundmaterial für Steigrohre (das Substrat) weiter verwendet und gleichzeitig die Standzeit der Steigrohre erheblich verlängert werden kann. Weiterhin ist bei Beschädigung der Hartbeschichtungen ebenfalls die Möglichkeit der Reparatur der Beschichtung gegeben.

### Detaillierte Beschreibung der Erfindung

Je nach Anwendungszweck weisen die erfindungsgemäß vorgesehenen Hartbeschichtungen Schichtdicken im Bereich von 30 bis 1000 µm, vorzugsweise 100 bis 800 µm, weiter vorzugsweise 130 bis 300 µm, auf.

Für die Ausbildung der erfindungsgemäßen Siliciumnitrid-Hartschichten eignet sich beispielsweise eine Schlichte, umfassend
a) Siliciumnitrid-Partikel, und
b) ein anorganisches Bindemittel, umfassend nanoskalige Feststoffteilchen
und/oder Vorstufen von nanoskaligen Feststoffteilchen aus der Herstellung über einen Sol-Gel-Prozess,
wobei die Siliciumnitrid-Partikel und das Bindemittel in solchen Anteilen eingesetzt werden, dass die aus der Schlichte erhaltene Hartbeschichtung bis zu 75 Gew.-% Siliciumnitrid und mindestens 25 Gew.-% des anorganischen Bindemittels umfasst, und dass der Gesamtsauerstoffgehalt der Hartbeschichtung > 15 Gew.-% beträgt, vorzugsweise im Bereich von > 15 bis 30 Gew.-%, weiter vorzugsweise > 15 bis 20 Gew.-%, insbesondere bevorzugt 16,5 bis 19 Gew.-%, liegt.

Vorzugsweise besteht die erfindungsgemäß vorgesehene Hartbeschichtung aus 50 bis 75 Gew.-% Siliciumnitrid und 25 bis 50 Gew.-% Bindemittel, weiter vorzugsweise aus 65 bis 75 Gew.-% Siliciumnitrid und 25 bis 35 Gew.-% Bindemittel, insbesondere bevorzugt aus 67 bis 72 Gew.-% Siliciumnitrid und 28 bis 33 Gew.-% Bindemittel. Vorzugsweise ist das Bindemittel ein SiO₂-basiertes Bindemittel.

Vorzugsweise wird ein Siliciumnitrid-Pulver hoher Reinheit eingesetzt, dessen Alkali- und Erdalkalimetallgehalt jeweils maximal 1000 ppm und dessen Fluorid- und Chloridgehalt jeweils maximal 2000 ppm, und dessen Gesamtkohlenstoffgehalt ebenfalls maximal 2000 ppm beträgt. Der Sauerstoffgehalt solcher Siliciumnitrid-Pulver hoher Reinheit liegt üblicherweise im Bereich von 1 bis 1,5 Gew.-%.

Damit die erfindungsgemäßen Siliciumnitrid-Hartschichten die oben genannten vorteilhaften Eigenschaften aufweisen, ist es erforderlich, dass der Siliciumnitridgehalt bis zu 75 Gew.-% und der Bindemittelgehalt mindestens 25 Gew.-% betragen und dass der Gesamtsauerstoffgehalt der Hartbeschichtung > 15 Gew.-% beträgt. Der Sauerstoffgehalt wird hierbei im wesentlichen durch das anorganische Bindemittel eingebracht. Wenn der Gesamtsauerstoffgehalt 15 Gew.-% oder weniger beträgt, verschlechtern sich insbesondere die mechanischen Eigenschaften der Hartbeschichtung, wie Abrieb- und Kratzfestigkeit. Wenn andererseits der Gesamtsauerstoffgehalt über 30 Gew.-% beträgt, besteht die Gefahr, dass die mit der Hartbeschichtung in Berührung kommenden Nichteisenmetallschmelzen verunreinigt werden.

Überraschenderweise hat sich gezeigt, dass trotz des hohen Bindergehaltes von mindestens 25 Gew.-% keine Kontamination im Ingot nachweisbar ist. Hohe Bindergehalte von von 25 Gew.-% und mehr sind erforderlich, um eine deutlich verbesserte Nichtbenetzung zu erhalten, was sich üblicherweise durch eine pulverfreie Ingot-Oberfläche an der ehemaligen Kontaktfläche Ingot/beschichtete Tiegelwand bzw. Ingot/beschichteter Tiegelboden nach dem Entformen zeigt. Mit sinkendem Bindergehalt kommt es verstärkt zur Bildung von Pulveranhaftungen am Ingot, so dass der Bindergehalt, insbesondere in Form eines SiO₂-basierten Bindemittels, in der Beschichtung mindestens 25 Gew.-% betragen muss. Im Vergleich zu der pulvrigen Beschichtung gemäß EP 963 464 B1 ist die Kontamination des Si-Ingots mit Siliziumnitrid bei den erfindungsgemäßen Beschichtungen deutlich geringer, insbesondere bei dem bevorzugten Bindergehalt von 25 bis 35 Gew.-%.

Das erfindungsgemäß eingesetzte Bindemittel, welches gemäß einer Aüsführungsform nanoskalige Feststoffteilchen und/oder Vorstufen von nanoskaligen Feststoffpartikeln aus der Herstellung über einen Sol-Gel-Prozess umfasst, ist dem Grunde nach aus DE 103 26 815 A1 bekannt. Es hat sich gezeigt, dass die Siliciumnitrid-Partikel mit diesem Bindemittel dauerhaft und temperaturstabil auf Substratoberflächen gebunden werden können. Bei einer bevorzugten Ausführungsform wird ein Nanopartikel enthaltendes Nanokomposit, insbesondere in Form eines Sols, als Bindemittel verwendet. Ein Nanokomposit bzw. ein Nanokompositsol besteht aus einer Mischung von nanoskaligen Feststoffteilchen und vorzugsweise nach dem Sol-Gel-Verfahren hergestellten anorganischen oder organisch modifizierten, anorganischen Polykondensaten oder Vorstufen davon. In der Beschichtungszusammensetzung liegt das Bindemittel aus Nanopartikeln oder Nanokomposit gewöhnlich als Sol oder Dispersion vor. In der gehärteten Schicht stellt es einen Matrixbildner dar. Durch diesen rein keramischen Aufbau der Schicht werden mehrere Anforderungen gewährleistet. Neben der Hochtemperaturstabilität und der Reinheit der Beschichtung wird die Haftung der Schicht auf dem Substrat und die mechanische Stabilität aufgrund der Härte und Abriebfestigkeit der Schicht gewährleistet.

Der erfindungsgemäß eingesetzte Binder ist im Verarbeitungszustand kein Gel, sondern ein Sol. Das Sol ist in einer bevorzugten Ausführungsform mit funktionalisierten/oberflächenmodifizierten Nanopartikeln gefüllt und bildet einen Nanokomposit-Binder. Die funktionalisierten Nanopartikel bieten deutliche Vorteile zur Applizierung höherer Schichtdicken gegenüber einem reinen Sol ohne Zusatz funktionalisierter Nano-Partikel. Durch die Oberflächenfunktionalisierung gelingt eine starke Anbindung an die Sol-Gel-Matrix, wodurch höhere Schichtfestigkeiten erzielt werden können. Das Sol wird bei der Schichttrocknung in ein Gel überführt durch Verdampfen des Lösungsmittels gemäß der klassischen Sol-Gel-Chemie. Dadurch bildet sich ein Gel aus. Demgegenüber unterscheidet sich ein Reaktivbinder von dem erfindungsgemäß eingesetzen Bindersystem dadurch, dass eine Reaktion ähnlich wie bei einem Zweikomponentenkleber entweder direkt oder während der Applikation gestartet wird. Der Reaktivbinder ist darin nachteilig, dass oft Inhomogenitäten der Binderkonzentration in der Beschichtung vorliegen, während bei dem erfindungsgemäß eingesetzen Bindersystem eine sehr homogene Verteilung des Binders in der Schicht erreicht wird. Insbesondere können Inhomogenitäten bei Reaktivbindern dann auftreten, wenn eine der Komponenten als Emulsion vorliegt oder der Binder ein Fällungsprodukt ist. Der erfindungsgemäß eingesetzte Sol-Gel-Binder weist eine sehr hohe Stabilität auf, wodurch eine Lagerstabilität von einem halben Jahr und mehr erreicht wird. Die Verarbeitbarkeit eines aktivierten Reaktivbinders kann demgegenüber je nach System weniger als eine Stunde betragen.

Bei den nanoskaligen Feststoffteilchen handelt es sich vorzugsweise um Metalloxidteilchen oder solche Systeme, die sich nach Härten durch Hochtemperaturbehandlung in nanoskalige Metalloxidteilchen umwandeln. Insbesondere sind die nanoskaligen Feststoffteilchen aus SiO₂, TiO₂, ZrO₂, Al₂O₃, AIOOH, Y₂O₃, CeO₂, SnO₂, Eisenoxiden und/oder Ta₂O₅ oder aus Vorstufen dieser nanoskaligen Feststoffteilchen, welche über den Sol-Gel-Prozess in diese Feststoffteilchen umgewandelt werden, ausgewählt, wobei SiO₂-Partikel und/oder Vorstufen von SiO₂-Partikeln, welche über den Sol-Gel-Prozess in nanoskalige SiO₂-Partikel umgewandelt werden, besonders bevorzugt sind.

Die erfindungsgemäß bevorzugten Nanokomposite und deren Herstellung nach dem Sol-Gel-Verfahren sind im Stand der Technik bekannt, insbesondere aus DE 103 26 815 A1. Hierbei ist es bevorzugt, dass die nanoskaligen Feststoffteilchen mit einem Oberflächenmodifizierungsmittel mit einem Molekulargewicht von weniger als 1.500 oberflächenmodifiziert sind, insbesondere einem Oberflächenmodifizierungsmittel, das eine Anhydridgruppe, Säureamidgruppe, Aminogruppe, SiOH-Gruppe, hydrolysierbare Reste von Silanen und/oder eine β-Dicarbonylgruppe enthält.

Vorzugsweise ist das Bindemittel erhältlich nach dem Sol-Gel-Verfahren durch Umsetzen von nanoskaligen Feststoffteilchen mit einem oder mehreren Silanen der allgemeinen Formel:

RₓSiA(₄₋ₓ) (I)

worin die Reste A gleich oder verschieden sind und Hydroxylgruppen oder hydrolysierbare Gruppen darstellen, die Reste R gleich oder verschieden sind und nichthydrolysierbare Gruppen darstellen und x den Wert 0, 1, 2 oder 3 hat, wobei bei mindestens 50% der Stoffmenge der Silane x ≥ 1 ist. Sofern nur Silane der Formel (I) mit x=0 verwendet werden, gelangt man zu rein anorganischen Nanokompositen, ansonsten werden die bevorzugten organisch-anorganischen Nanokomposite erhalten.

Geeignete Beispiele von Silanen der obigen Formel (I) sind ebenfalls in der DE 103 26 815 A1 aufgeführt.

Insbesondere werden die erfindungsgemäßen Beschichtungen aus alkoholischen SiO₂-bildenden Solen, in denen hochreine Siliciumnitrid-Pulver dispergiert werden, hergestellt. Da Siliciumnitrid in Gegenwart von Wasser zur Hydrolyse neigt, sollten keine wasserbasierten Formulierungen eingesetzt werden, vielmehr sind alkoholische SiO₂-bildende Sole bevorzugt. Ferner ist die Verwendung hochreiner Ausgangschemikalien (Siliciumnitrid-Pulver, Silane, Alkohole, etc.) bevorzugt, da hierbei höchstreine Schichten erhalten werden können, die insbesondere den Anforderungen der Solarindustrie gerecht werden.

Gemäß einer weiteren Ausführungsform kann die Hartbeschichtung Füllstoffe enthalten, ausgewählt aus SiO₂, TiO₂, ZrO2, Al₂O₃, AlOOH, Y₂O₃, CeO₂, SnO₂, Eisenoxiden und/oder Ta₂O₅. Diese Füllstoffe weisen vorzugsweise eine Größe im Submikron bis wenige µm-Bereich auf und können zusätzlich zu den vorgenannten nanoskaligen Feststoffteilchen enthalten sein. Mittels solchen Füllstoffen kann eine Erhöhung der Schichtdicke erreicht werden. Zur Erhöhung der Schichtdicke können ebenfalls Porenbildner eingesetzt werden, beispielsweise Ruß oder Graphit, wodurch eine poröse Hartbeschichtung resultiert.

Bei den erfindungsgemäßen Formkörpern besteht das Substrat geeigneterweise aus Quarz, Graphit, Keramik (einschließlich Siliciumnitrid-Keramik), SiO₂ (fused silica) oder einer Eisenlegierung. Bei einer bevorzugten Ausführungsform handelt es sich bei dem Formkörper um einen Schmelztiegel mit einem Substrat aus Quarz, Graphit oder Keramik, welcher sich für die Verarbeitung korrosiver Nichteisenmetallschmelzen, insbesondere Siliciumschmelzen eignet.

Gemäß einer anderen Ausführungsform handelt es sich bei dem Formkörper um ein Steigrohr mit einem Substrat aus SiO₂ (fused silica) oder einer Eisenlegierung für die Aluminium-Metallurgie.

Das Verfahren zur Herstellung eines erfindungsgemäßen Formkörpers umfasst mindestens die folgenden Schritte
a) Vorsehen eines Substrats, und
b) Aufbringen einer dauerhaften Hartbeschichtung, welche bis zu 75 Gew.-% Siliciumnitrid und mindestens 25 Gew.-% eines anorganischen Bindemittels umfasst, und wobei der Gesamtsauerstoffgehalt der Hartbeschichtung > 15 Gew.-% beträgt.

Das Verfahren zur Aufbringung der Hartbeschichtung auf das Substrat umfasst vorzugsweise die folgenden Schritte
i) Auftragen einer wie oben beschriebenen Schlichte auf das Substrat durch ein- oder mehrmaliges Rakeln, Tauchen, Fluten, Schleudern, Sprühen, Bürsten oder Streichen,
ii) Härten der aufgetragenen Schlichte zur Ausbildung der dauerhaften Hartbeschichtung auf dem Substrat.

Zur Verbesserung der Haftung kann es in manchen Fällen vorteilhaft sein, das Substrat vor dem Kontaktieren mit verdünnten oder unverdünnten Bindemittelsolen bzw. deren Vorstufen oder anderen Primern zu behandeln.

Der Feststoffgehalt der verwendeten Schlichten kann in Abhängigkeit vom gewählten Beschichtungsverfahren durch Zugabe von Lösungsmittel eingestellt werden. Für eine Sprühbeschichtung wird gewöhnlich ein Feststoffgehalt von 2 bis 70 Gew.-%, vorzugsweise 5 bis 50 Gew.-% und besonders bevorzugt von 10 bis 30 Gew.-%, eingestellt.

Der abschließenden Härtung können eine oder mehrere Trocknungsstufen bei Raumtemperatur oder leicht erhöhter Temperatur, beispielsweise in einem Umlufttrockenschrank und/oder durch Beheizung der Formkörper selbst vorangehen. Bei oxidationsempfindlichen Substraten kann die Trocknung und/oder nachfolgende Härtung in einer Schutzgasatmosphäre, beispielsweise in N₂ oder Ar oder im Vakuum erfolgen.

Die thermische Aushärtung erfolgt unter Berücksichtigung der Wärmeempfindlichkeit, vorzugsweise durch Wärmebehandlung bei Temperaturen über 50°C, vorzugsweise über 200°C und besonders bevorzugt über 300°C. Die Schichten können auch bei höheren Temperaturen ausgeheizt werden, bevorzugt bei Temperaturen von 500 bis 700°C, vorausgesetzt das Substrat ist bei diesen Temperaturen ausreichend stabil.

Das anorganische Bindemittel kann nach der thermischen Aushärtung bzw. dem Einbrennen in amorpher oder teilweise amorpher und teilweise kristalliner Form vorliegen. Zusätzlich können nanoskalige Feststoffpartikel enthalten sein.

Bei einer weiteren Ausführungsform der Erfindung können die Schichten auch als Mehrfachschichten erzeugt werden.

Bei einer weiteren Ausführungsform der Erfindung können Gradientenschichten ausgebildet werden, wobei die Art und Reinheit der verwendeten Siliciumnitrid-Partikel beispielsweise von unten (substratseitig) nach oben (schmelzseitig) variieren kann. Hierbei können hinsichtlich Reinheit, Partikelgröße oder Partikelmorphologie unterschiedliche Siliciumnitrid-Qualitäten innerhalb des Schichtaufbaus verwendet werden. Weiterhin können in die Gradientenschichten auch unterschiedliche Bindergehalte eingebracht werden. Diese Gradientenschichten können auch als Mehrfachschichten erzeugt und angeordnet werden.

Die erfindungsgemäßen Formkörper mit den dauerhaften Hartbeschichtungen eignen sich auf dem Gebiet der korrosiven Nichteisenmetallschmelzen, wie Schmelzen von Aluminium, Glas, Silicium und dergleichen. Formkörper in Form von Schmelztiegeln eignen sich insbesondere zur Herstellung von Siliciumschmelzen, zur Aufnahme von flüssigem Silicium und zur Kristallisation von flüssigem Silicium zu Siliciumblöcken.

Formkörper in der Form von Steigrohren eignen sich insbesondere in der Aluminium-Metallurgie, ganz besonders dem Aluminium-Niederdruckguss.

Die nachfolgenden Beispiele erläutern die Erfindung.

### Vergleichsbeispiel: Standardsuspension

Hierbei handelt es sich um eine gemäß EP 963 464 hergestellte Suspension von Siliciumnitrid-Pulver in dest. Wasser ohne weitere Zusätze.

Für die weitere Verarbeitung (Pinseln, Rollen, Sprühen) ist nur die Rheologie dieser Suspension Ausschlag gebend. Dementsprechend wird der Feststoffgehalt eingestellt, beispielsweise 60-70 Gew.-% für die Applikation mittels Sprühpistole.

Die Suspension wird auf den gereinigten, staubfreien, trockenen Tiegel ggf. in mehreren Schichten aufgebracht, um eine homogene Schichtdicke von beispielsweise 500-800 µm zu erzeugen. Nach Trocknung wird die Beschichtung vor dem Einsatz als Schmelztiegel bei ca. 1000-1100°C eingebrannt.

Die erhaltene Siliciumnitrid-Pulverbeschichtung sollte blasen- und rissfrei sein und auch keine anderen Defekte aufweisen.

Die so hergestellte Siliciumnitrid-Schicht ist nur bedingt berührungsfest und sollte entsprechend sorgsam behandelt werden. Nicht nur beim Beladen mit stückigem Si muss eine Verletzung der Beschichtung vermieden werden, sondern die Beladung muss auch selber dermaßen erfolgen, dass beim Erschmelzen das Verrutschen von stückigem Si vermieden wird, damit hier ebenfalls keine Defekte in der Pulverschicht erzeugt werden.

### Beispiel 1: Siliciumnitrid-Hardcoating

300 g Siliciumnitrid-Pulver werden in 1 kg Binder mit einem Rühraggregat eingearbeitet und anschließend auf dem Rollenbock mit Siliciumnitrid-Kugeln homogenisiert. Der Binder besteht aus einem SiO₂-Sol-Gel-Nanokomposit mit SiO₂-Nanopartikeln, die mit hydrolisierbaren Resten von Silanen oberflächenmodifiziert wurden. Eine sprühfertige Suspension wird über Zugabe von 390 g Ethanol hergestellt. Die Suspension wird mit üblichen Lackierpistolen appliziert. Nach dem "Ablüften" bei Raumtemperatur wird die Beschichtung im Trockenschrank getrocknet und anschließend bei 500°C für 30 min eingebrannt. Nach dem Einbrennen beträgt die Schichtdicke im Mittel 80 µm. Die gebrauchsfertige Beschichtung besteht aus 50 Gew.% Siliziumnitrid und 50 Gew.-% SiO₂. Der Sauerstoffgehalt der Beschichtung beträgt 28 Gew.-%.

Das beschichtete Fused Silica-Steigrohr wird durch Aluminium-Schmelze nicht benetzt. Die Standzeit wird um 50% gegenüber einem unbeschichteten Steigrohr erhöht.

### Beispiel 2: Siliciumnitrid-Hardcoating

600 g Siliciumnitrid-Pulver werden in 1 kg Binder mit einem Rühraggregat eingearbeitet und anschließend auf dem Rollenbock mit Siliciumnitrid-Kugeln homogenisiert. Der Binder besteht aus einem SiO₂-Sol-Gel-Nanokomposit mit SiO₂-Nanopartikeln, die mit hydrolisierbaren Resten von Silanen oberflächenmodifiziert wurden. Danach werden 240 g Ethanol zugegeben. Die so erhaltene Suspension wird über Pinseln und Rollen appliziert. Nach dem "Ablüften" bei Raumtemperatur wird die Beschichtung im Trockenschrank getrocknet und anschließend bei 500°C für 30 min eingebrannt. Nach dem Einbrennen beträgt die Schichtdicke im Mittel 150 µm. Die gebrauchsfertige Beschichtung besteht aus 67 Gew.-% Siliziumnitrid und 33 Gew.-% SiO₂. Der Sauerstoffgehalt der Beschichtung beträgt 19 Gew.-%.

Der beschichtete Tiegel kann jetzt dem Schmelzprozess zugeführt werden. Der defektfreie Si-Ingot lässt sich problemlos entformen.

Die in den Beispielen beschriebenen Ausführungen der erfindungsgemäßen Siliciumnitrid-Beschichtungen unterscheiden sich von der Referenzbeschichtung nach dem Stand der Technik durch ihre geringere Schichtdicken. Trotz der geringeren Schichtdicken werden immer funktionelle, d.h. defektfreie (blasen-, rissfrei) Trennschichten erzeugt. Durch den enthaltenen Binder weisen diese Schichten gegenüber der standardmäßigen Siliciumnitrid-Pulverbeschichtung deutlich höhere Haft- und Kratzfestigkeiten auf. Trotz der dünneren Beschichtung werden die Schichten beim Beladen oder/und Erschmelzen des stückigen Si nicht beschädigt, so dass der Kontakt zwischen Schmelze und Tiegel, der beim Erstarren zur Anhaftung und damit zu Abplatzungen und Rissen führt, vermieden wird.

Die beschriebenen, erfindungsgemäßen Siliciumnitrid-Beschichtungen unterscheiden sich im Sauerstoffgehalt, dem Siliciumnitrid:Binder-Verhältnis und den Schichtdicken und dementsprechend in der Viskosität der Suspension, die die Applikationstechnik der Suspension bedingt bzw. den erzielbaren, defektfreien Schichten: Je höher das Siliciumnitrid:Binder-Verhältnis, desto dickere Schichten; je niedriger das Siliciumnitrid:Binder-Verhältnis, desto härter/kratzfester.

## Patentansprüche

1. Formkörper, umfassend ein Substrat mit einer dauerhaften Hartbeschichtung, wobei die Hartbeschichtung bis zu 75 Gew.-% Siliciumnitrid und mindestens 25 Gew.-% eines anorganischen Bindemittels umfasst, und wobei der Gesamtsauerstoffgehalt der Hartbeschichtung > 15 Gew.-% beträgt.

2. Formkörper nach Anspruch 1, wobei die Hartbeschichtung 50 bis 75 Gew.-% Siliciumnitrid und 25 bis 50 Gew.-% des anorganischen Bindemittels umfasst, und wobei der Gesamtsauerstoffgehalt der Hartbeschichtung im Bereich von > 15 bis 30 Gew.-% liegt.

3. Formkörper nach Anspruch 1 und/oder 2, wobei die Hartbeschichtung 65 bis 75 Gew.-% Siliciumnitrid und 25 bis 35 Gew.-% des anorganischen Bindemittels umfasst, und wobei der Gesamtsauerstoffgehalt der Hartbeschichtung im Bereich von > 15 bis 20 Gew.-% liegt.

4. Formkörper nach mindestens einem der vorangehenden Ansprüche, wobei die Hartbeschichtung 67 bis 72 Gew.-% Siliciumnitrid und 28 bis 33 Gew.-% des anorganischen Bindemittels umfasst, und wobei der Gesamtsauerstoffgehalt der Hartbeschichtung im Bereich von 16,5 bis 19 Gew.-% liegt.

5. Formkörper nach mindestens einem der vorangehenden Ansprüche, wobei das anorganische Bindemittel ein SiO₂-basiertes Bindemittel ist.

6. Formkörper nach mindestens einem der vorangehenden Ansprüche, wobei die Hartbeschichtung zusätzlich nanoskalige Feststoffteilchen enthält.

7. Formkörper nach Anspruch 6, wobei die nanoskaligen Feststoffteilchen Metalloxidteilchen sind.

8. Formkörper nach Anspruch 6 und/oder 7, wobei die nanoskaligen Feststoffteilchen aus SiO₂, TiO₂, ZrO₂, Al₂O₃, AlOOH, Y₂O₃, CeO₂, SnO₂, Eisenoxiden und/oder Ta₂O₅ ausgewählt sind.

9. Formkörper nach mindestens einem der Ansprüche 6-8, wobei als nanoskalige Feststoffteilchen SiO₂-Partikel enthalten sind.

10. Formkörper nach mindestens einem der Ansprüche 6-9, wobei die nanoskaligen Feststoffteilchen mit einem Oberflächenmodifizierungsmittel mit einem Molekulargewicht von weniger als 1.500 oberflächenmodifiziert sind.

11. Formkörper nach mindestens einem der Ansprüche 6-10, wobei die nanoskaligen Feststoffteilchen mit einem Oberflächenmodifizierungsmittel modifiziert sind, das eine Anhydridgruppe, Säureamidgruppe, Aminogruppe, SiOH-Gruppe, hydrolysierbare Reste von Silanen und/oder eine β-Dicarbonylgruppe enthält.

12. Formkörper nach mindestens einem der Ansprüche 6 bis 11, wobei das Bindemittel erhältlich ist nach dem Sol-Gel-Verfahren durch Umsetzen von nanoskaligen Feststoffteilchen mit einem oder mehreren Silanen der allgemeinen Formel (I):
RₓSiA(₄₋ₓ) (I)
worin die Reste A gleich oder verschieden sind und Hydroxylgruppen oder hydrolysierbare Gruppen darstellen, die Reste R gleich oder verschieden sind und nichthydrolysierbare Gruppen darstellen und x den Wert 0, 1, 2 oder 3 hat, wobei bei mindestens 50% der Stoffmenge der Silane x ≥ 1 ist.

13. Formkörper nach Anspruch 1, wobei das Bindemittel erhältlich ist nach dem Sol-Gel-Verfahren durch Umsetzen von einem oder mehreren Silanen der allgemeinen Formel (I):
RₓSiA₍₄₋ₓ₎ (I)
worin die Reste A gleich oder verschieden sind und Hydroxylgruppen oder hydrolysierbare Gruppen darstellen, die Reste R gleich oder verschieden sind und nichthydrolysierbare Gruppen darstellen und x den Wert 0, 1, 2 oder 3 hat, wobei bei mindestens 50% der Stoffmenge der Silane x ≥ 1 ist.

14. Formkörper nach mindestens einem der vorangehenden Ansprüche, wobei die Hartbeschichtung Füllstoffe enthält, ausgewählt aus SiO₂. TiO₂, ZrO₂, Al₂O₃, AlOOH, Y₂O₃, CeO₂, SnO₂, Eisenoxiden und/oder Ta₂O₅.

15. Formkörper nach mindestens einem der vorangehenden Ansprüche, wobei dem Bindemittel Porenbildner zugesetzt werden.

16. Formkörper nach mindestens einem der vorangehenden Ansprüche, wobei das Substrat aus Quarz, Graphit, Keramik, SiO₂ (fused silica) oder einer Eisenlegierung besteht.

17. Formkörper nach mindestens einem der vorangehenden Ansprüche, bei dem es sich um einen Schmelztiegel mit einem Substrat aus Quarz, Graphit oder Keramik für korrosive Nichteisenmetallschmelzen handelt.

18. Formkörper nach mindestens einem der Ansprüche 1 bis 16, bei dem es sich um ein Steigrohr mit einem Substrat aus SiO₂ (fused silica) oder einer Eisenlegierung für die Al-Metallurgie handelt.

19. Verfahren zur Herstellung eines Formkörpers aus einem Substrat mit einer dauerhaften Hartbeschichtung, umfassend die Schritte
a) Vorsehen eines Substrats, und
b) Aufbringen einer dauerhaften Hartbeschichtung, welche bis zu 75 Gew.-% Siliciumnitrid und mindestens 25 Gew.-% eines anorganischen Bindemittels umfasst, und wobei der Gesamtsauerstoffgehalt der Hartbeschichtung > 15 Gew.-% beträgt.

20. Verfahren zur Herstellung eines Formkörpers nach Anspruch 19, wobei der Schritt b) des Aufbringens der Hartbeschichtung folgende Schritte umfasst
i) Auftragen einer Schlichte auf das Substrat durch ein- oder mehrmaliges Rakeln, Tauchen, Fluten, Schleudern, Sprühen, Bürsten oder Streichen,
ii) Härten der aufgetragenen Schlichte zur Ausbildung der dauerhaften Hartbeschichtung auf dem Substrat.

21. Verwendung eines Formkörpers gemäß mindestens einem der Ansprüche 1-18 auf dem Gebiet der korrosiven Nichteisenmetallschmelzen.

22. Verwendung eines Schmelztiegels gemäß Anspruch 21 zur Herstellung von Siliciumschmelzen, zur Aufnahme von flüssigem Silicium und/oder zur Kristallisation von flüssigem Silicium zu Siliciumblöcken.

23. Verwendung eines Steigrohrs nach Anspruch 18 in der Al-Metallurgie, insbesondere dem Al-Niederdruckguss.

## Claims

1. A moulding comprising a substrate having a durable hard coating, wherein the hard coating comprises up to 75 % by weight silicon nitride and at least 25 % of an inorganic binder, and wherein the total oxygen content of the hard coating is > 15 % by weight.

2. The moulding according to claim 1, wherein the hard coating comprises 50 to 75 % by weight silicon nitride and 25 to 50 % by weight of the inorganic binder, and wherein the total oxygen content of the hard coating lies in the range of > 15 to 30 % by weight.

3. The moulding according to claim 1 and/or claim 2, wherein the hard coating comprises 65 to 75 % by weight silicon nitride and 25 to 35 % by weight of the inorganic binder, and wherein the total oxygen content of the hard coating lies in the range of > 15 to 20 % by weight.

4. The moulding according to at least one of the preceding claims, wherein the hard coating comprises 67 to 72 % by weight silicon nitride and 28 to 33 % by weight of the inorganic binder, and wherein the total oxygen content of the hard coating lies in the range of 16.5 to 19 % by weight.

5. The moulding according to at least one of the preceding claims, wherein the inorganic binder is a SiO₂-based binder.

6. The moulding according to at least one of the preceding claims, wherein the hard coating additionally contains nanoscale solid particles.

7. The moulding according to claim 6, wherein the nanoscale solid particles are metal oxide particles.

8. The moulding according to claim 6 and/or 7, wherein the nanoscale solid particles are selected from SiO₂, TiO₂, ZrO₂, Al₂O₃, AlOOH., Y₂O₃, CeO₂, SnO₂, iron oxides and/or Ta₂O₅.

9. The moulding according to at least one of claims 6 to 8, wherein SiO₂ particles are contained as nanoscale solid particles.

10. The moulding according to at least one of claims 6 to 9, wherein the nanoscale solid particles are surface-modified by a surface modifying agent having a molecular weight of less than 1,500.

11. The moulding according to at least one of claims 6 to 10, wherein the nanoscale solid particles are modified by a surface modifying agent which contains an anhydride group, acid amide group, SiOH group, hydrolysable radicals of silanes and/or a β-dicarbonyl group.

12. The moulding according to at least one of claims 6 to 11, wherein the binder is obtainable by the sol-gel method by reacting nanoscale solid particles with one or more silanes of general formula (I):
***RₓSiA*_{(4-*x*)}** (I)
in which the radicals A are the same or different and represent hydroxyl groups or hydrolysable groups, the radicals R are the same or different and represent non-hydrolysable groups and x has the value 0, 1, 2 or 3, x being ≥ 1 in at least 50 % of the amount of silanes.

13. The moulding according to claim 1, wherein the binder is obtainable by the sol-gel method by reacting one or more silanes of general formula (I):
***RₓSiA*_{(4-*x*)}** (I)
in which the radicals A are the same or different and represent hydroxyl groups or hydrolysable groups, the radicals R are the same or different and represent non-hydrolysable groups and x has the value 0, 1, 2 or 3, x being ≥ 1 in at least 50 % of the amount of silanes.

14. The moulding according to at least one of the preceding claims, wherein the hard coating contains fillers selected from SiO₂, TiO₂, ZrO₂, Al₂O₃, AlOOH, Y₂O₃, CeO₂, SnO₂, iron oxides and/or Ta₂O₅.

15. The moulding according to at least one of the preceding claims, wherein pore-forming materials are added to the binder.

16. The moulding according to at least one of the preceding claims, wherein the substrate consists of quartz, graphite, ceramics, SiO₂ (fused silica) or an iron alloy.

17. The moulding according to at least one of the preceding claims, wherein it is a crucible having a substrate made of quartz, graphite or ceramics for corrosive nonferrous metal melts.

18. The moulding according to at least one of claims 1 to 16, wherein it is a rising pipe having a substrate made of SiO₂ (fused silica) or an iron alloy for Al metallurgy.

19. A method for producing a moulding from a substrate having a durable hard coating, comprising the following steps
a) providing a substrate, and
b) applying a durable hard coating which comprises up to 75 % by weight silicon nitride and at least 25 % by weight of an inorganic binder, and wherein the total oxygen content of the hard coating is > 15 % by weight.

20. The method for producing a moulding according to claim 19, wherein step b) of applying the hard coating comprises the following steps:
i) applying a slip to the substrate by single or multiple applications with a doctor blade, dipping, flooding, centrifugation, spraying, brushing or painting;
ii) curing the applied slip to form the durable hard coating on the substrate.

21. A use of a moulding according to at least one of claims 1 to 18 in the field of corrosive nonferrous metal melts.

22. The use of a crucible according to claim 21 to produce silicon melts for the absorption of liquid silicon and/or for the crystallisation of liquid silicon to form silicon blocks.

23. A use of a rising pipe according to claim 18 in Al metallurgy, in particular Al low-pressure casting.

## Revendications

1. Corps moulé, comprenant un substrat avec un revêtement dur permanent, le revêtement dur comprenant jusqu'à 75 % en poids de nitrure de silicium et au moins 25 % en poids d'un agent de liaison anorganique et la teneur total en oxygène du revêtement dur étant > 15 % en poids.

2. Corps moulé selon la revendication 1, le revêtement dur comprenant de 50 à 75 % en poids de nitrure de silicium et de 25 à 50 % en poids de l'agent de liaison anorganique et la teneur totale en oxygène du revêtement dur étant de l'ordre de > 15 à 30 % en poids.

3. Corps moulé selon la revendication 1 et/ou 2, le revêtement dur comprenant de 65 à 75 % en poids de nitrure de silicium et de 25 à 35 % en poids de l'agent de liaison anorganique et la teneur totale en oxygène du revêtement dur étant de l'ordre de > 15 à 20 % en poids.

4. Corps moulé selon au moins l'une quelconque des revendications précédentes, le revêtement dur comprenant de 67 à 72 % en poids de nitrure de silicium et de 28 à 33 % en poids de l'agent de liaison anorganique et la teneur totale en oxygène du revêtement dur étant de l'ordre de 16,5 à 19 % en poids.

5. Corps moulé selon au moins l'une quelconque des revendications précédentes, l'agent de liaison anorganique étant un agent de liaison basé SiO₂.

6. Corps moulé selon au moins l'une quelconque des revendications précédentes, le revêtement dur contenant en supplément des solides nanoparticulaires.

7. Corps moulé selon la revendication 6, les solides nanoparticulaires étant des particules d'oxydes métalliques.

8. Corps moulé selon la revendication 6 et/ou 7, les solides nanoparticulaires étant choisis parmi le SiO₂, le TiO₂, le ZrO₂, l'Al₂O3, l'AlOOH, l'Y₂O₃, le CeO₂, le SnO₂, les oxydes de fer et/ou le Ta₂O₅.

9. Corps moulé selon au moins l'une quelconque des revendications 6 à 8, les solides nanoparticulaires contenus étant des particules de SiO₂.

10. Corps moulé selon au moins l'une quelconque des revendications 6 à 9, les solides nanoparticulaires étant modifiés en surface avec un produit de modification des surfaces d'un poids moléculaire inférieur à 1.500.

11. Corps moulé selon au moins l'une quelconque des revendications 6 à 10, les solides nanoparticulaires étant modifiés avec un produit de modification des surfaces contenant un groupe anhydride, un groupe d'amide d'acide, un groupe amino, un groupe SiOH, des restes hydrolysables de silanes et/ou un groupe β-dicarbonyle.

12. Corps moulé selon au moins l'une quelconque des revendications 6 à 11, l'agent de liaison pouvant être obtenu selon la méthode sol-gel par transformation de solides nanoparticulaires avec un ou plusieurs silanes de la forme générale (I) :
***RₓSiA*_{(4-*x*)}** (I)
où les radicaux A sont identiques ou différents et représentent des groupes hydroxyles ou hydrolysables, les radicaux R sont identiques ou différents et représentent des groupes non hydrolysables et x est la valeur 0, 1, 2 ou 3, dans au moins 50% de la quantité de matière, le silane x étant ≥ 1.

13. Corps moulé selon la revendication 1, l'agent de liaison pouvant être obtenu selon la méthode sol-gel par transformation d'un ou de plusieurs silanes de la formule générale (I) :
***RₓSiA*_{(4-*x*)}** (I)
où les radicaux A sont identiques ou différents et représentent des groupes hydroxyles ou hydrolysables, les radicaux R sont identiques ou différents et représentent des groupes non hydrolysables et x est la valeur 0, 1, 2 ou 3, dans au moins 50% de la quantité de matière, le silane x étant ≥ 1.

14. Corps moulé selon au moins l'une quelconque des revendications précédentes, le revêtement dur contenant des agents de charge, choisis parmi le SiO₂, le TiO₂, le ZrO₂, l'Al₂O₃, l'AlOOH, l'Y₂O₃, le CeO₂, le SnO₂, des oxydes de fer et/ou le Ta₂O₅.

15. Corps moulé selon au moins l'une quelconque des revendications précédentes, des agents porogènes étant ajoutés à l'agent de liaison.

16. Corps moulé selon au moins l'une quelconque des revendications précédentes, le substrat étant constitué de quartz, de graphite, de céramique, de SiO₂ (silice fondue) ou d'un alliage de fer.

17. Corps moulé selon au moins l'une quelconque des revendications précédentes, s'agissant d'un creuset avec un substrat en quartz, en graphite ou en céramique pour des masses en fusion corrosives non métalliques.

18. Corps moulé selon au moins l'une quelconque des revendications 1 à 16, s'agissant d'une colonne montante avec un substrat en SiO₂ (silice fondue) ou d'un alliage de fer pour la métallurgie Al.

19. Procédé de fabrication d'un corps moulé à partir d'un substrat avec un revêtement dur permanent, comprenant les étapes
a) prévoir un substrat et
b) appliquer un revêtement dur permanent, qui comprend jusqu'à 75 % en poids de nitrure de silicium et au moins 25 % en poids d'un agent de liaison anorganique et la teneur totale en oxygène du revêtement dur étant > 15 % en poids.

20. Procédé de fabrication d'un corps moulé selon la revendication 19, l'étape b) de l'application du revêtement dur comprenant les étapes suivantes
i) application sur le substrat d'un enduit par raclage, immersion, submersion, centrifugation, vaporisation, brossage ou enduction,
ii) trempe de l'enduit appliqué pour créer le revêtement dur sur le substrat.

21. Utilisation d'un corps moulé selon au moins l'une quelconque des revendications 1 à 18 dans le secteur des masses en fusion métalliques non ferreuses.

22. Utilisation d'un creuset selon la revendication 21 pour fabriquer des masses en fusion en silicium, pour réceptionner du silicium liquide et/ou pour cristalliser du silicium liquide en blocs de silicium.

23. Utilisation d'une colonne montante selon la revendication 18 dans la métallurgie Al, notamment dans la coulée d'Al à basse pression.
